**Europäisches Patentamt**

**European Patent Office**

**Office européen des brevets**

(19)

(11) Numéro de publication: **0 148 098**
**B1**

# (12) FASCICULE DE BREVET EUROPEEN

(45) Date de publication du fascicule du brevet: **11.04.90**

(51) Int. Cl.⁵: **H 03 K 5/153, H 04 N 7/00**

(21) Numéro de dépôt: **84460012.2**

(22) Date de dépôt: **12.12.84**

(54) **Circuit de régénération de signaux périodiques.**

(30) Priorité: **15.12.83 FR 8320254**

(43) Date de publication de la demande:
**10.07.85 Bulletin 85/28**

(45) Mention de la délivrance du brevet:
**11.04.90 Bulletin 90/15**

(84) Etats contractants désignés:
**AT BE CH DE GB IT LI LU NL SE**

(56) Documents cités:
**EP-A-0 022 723**
**EP-A-0 074 039**
**GB-A-2 086 177**

(73) Titulaire: **Etablissement Public de Diffusion dit "Télédiffusion de France"**
**21-27 rue Barbès**
**F-92120 Montrouge (FR)**

(72) Inventeur: **Bauduin, Jean-Pierre André**
**Lieu dit Riniac**
**F-35270 Combourg (FR)**

(74) Mandataire: **Le Guen, Louis François**
**CABINET Louis LE GUEN 38, rue Levavasseur**
**B.P. 91**
**F-35802 Dinard Cédex (FR)**

EP 0 148 098 B1

Courier Press, Leamington Spa, England.

## Description

La présente invention concerne un procédé et un circuit de régénération d'instants périodiques et, plus particulièrement, le circuit de l'invention permit de régénérer des instants significatifs d'un signal périodique dont la périodicité a été détériorée soit par la présence de phénomènes parasites, soit par la disparition momentanée des information périodiques.

A titre d'example, le circuit de régénération suivant l'invention est applicable dans les démodulators de système de télédiffusion de télétexte, tels que celui qui est décrit dans le brevet FR—A—2 313 825, ce système étant connu et utilisé en France sous le nom de système DIDON. Dans les systèmes de télédiffusion de données, les paquets de données portés par les lignes de télévision sont positionnés dans ces lignes à une distance temporelle fixe du signal de synchronisation de ligne. Dans les transmissions par voie hertzienne, le rapport signal à bruit subit souvent des fluctuations telles que le signal de synchronisation ligne n'est plus reçu. Les circuits des récepteurs de télévision sont tels que, dans ces conditions, ils restituent une image acceptable car le signal analogique varie peu d'une ligne à la suivante et que l'on utilise un balayage entrelacé. Par contre, dans le transmission de données, entre les trains transmis sur deux lignes, il n'y a aucune corrélation. Il faut donc, à chaque ligne, disposer d'un signal de synchronisation.

Dans le brevet GB No 2086177, il est décrit un circuit de synchronisation comportant un détecteur de synchronisation, deux générateurs d'impulsions supplémentaires et un commutateur de sortie, l'un des générateurs ayant une fréquence égale à la fréquence théorique du signal périodique recherché. Toutfois, le instants régénéres par ce circuit présentent de grandes différences avec le signal périodique recherché et ne permet pas de réaliser un véritable asservissement.

L'un objet de l'invention consiste donc à prévoir un circuit permettant de restituer les instants significatifs d'un signal périodique, même quand ce signal est absent, ce signal étant dans l'exemple de réalisation qui va être décrit le signal de synchronisation ligne.

L'objet de l'invention mentionné ci-dessus est atteint par la mise en oeuvre des combinaisons de moyens définis dans les revendications complétant la présente description.

Les caractéristiques de l'invention mentionées ci-dessus, ainsi qui d'autres, apparaîtront plus clairement à la lecture de la description suivante d'un example de réalisation, ladite description étant faite en relation avec les dessins joints, par lesquels:

la Fig. 1 montre le bloc-diagramme d'un démodulateur de système de télédiffusion de données comprenant le circuit de régénération suivant l'invention,

la Fig. 2 est le schéma d'un compteur programmable utilisé dans le démodulateur de la Fig. 1, et

les Figs. 3a à 3f sont des diagrammes de temps illustrant le fonctionnement des circuits des Figs. 1 et 2.

Le circuit de régénération d'instants périodiques suivant l'invention est d'une utilisation générale. Toutefois, il trouve une application particulière dans les récepteurs de télédiffusion de données, tels que ceux du système français DIDON. dans le système DIDON, le paquet de données porté par chaque ligne a comme référence temporelle le signal de synchronisation de la ligne quile porte. Il est donc essentiel de régénérer dans ces récepteurs ces instants périodique de référence.

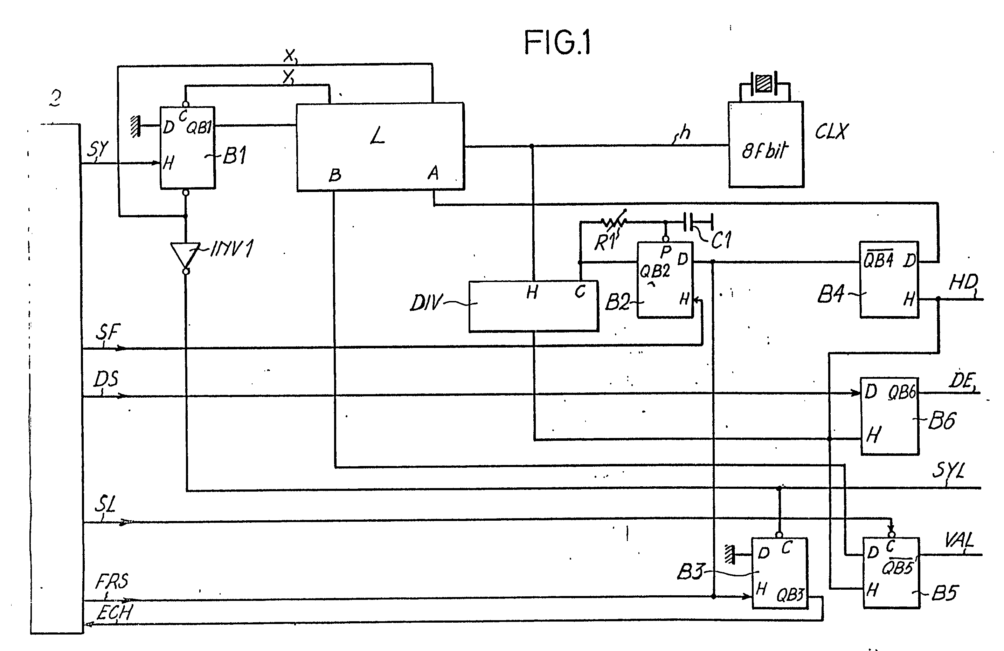

A la Fig. 1, on a représenté, en détail, un ensemble 1 de circuits loqiques faisant partie d'un démodulator DIDON, lequel comprend également une partie analogique 2 qui délivre à l'ensemble 1, en SY, le signal de synchronisation complet, en DS, les données série, en SF, la salve filtrée et, en SL, le signal de détection de salve. L'ensemble 1 renvoit à la partie analogique 2, en ECH, le signal d'échantillonnage de la valeur moyenne et, en FRS, le fenêtre de recherche de salve.

D'autre part, l'ensemble 1 délivre aux circuits d'utilisation, en HD, l'horloge bit des données, en DE, les données échantillonnées, en SYL la synchronisation ligne et, en VAL, le signal de validation de paquet.

Dans l'ensemble 1, Fig. 1, l'entrée de signal de synchronisation complet SY est reliée à l'entrée d'horloge d'un bascule B1 du type D, dont l'entrée D est reliée à la masse, l'entrée "c" de mise à 0 à la sortie Y d'un compteur programmable L, l'entrée "p" de remise à 1 à la sortie X du compteur L et la sortie QB1 à l'entrée de remise à zéro du compteur L. En pratique, le compteur programmable L, comme on le verra dans la suite, sert de base de temps dont les instants de réinitialisation sont les instants périodiques régénérés suivant l'invention.

L'entrée d'horloge du compteur L est reliée à la sortie d'un horloge à quartz CLX dont la fréquence est réglée à huit fois la fréquence bit des données DIDON. La sortie X du circuit logique L est encore reliée, par un inverseur INV1, d'une part, à l'entrée "c" de remise à 0 d'une bascule B3 et, d'autre part, à la sortie SYL.

La bascule B2 a son entrée d'horloge H reliée à l'entrée de signal de salve filtrée SF, son entrée D reliée à la sortie $\overline{Q}_{B4}$ d'une bascule B4, et sa sortie $Q_{B2}$ reliée, d'une part, à l'entrée "c" d'un diviseur de fréquence par huit DIV et, d'autre part, à son entrée "p" de remise à 1 par l'intermédiaire d'un résistance variable R1, cette entrée "p" étant également reliée à la masse par un condensateur C1. L'ensemble de la bascule B2, de la résistance R1 et du condensateur C1 forme un circuit monostable qui est mis à 1 légrèment après que le passage au niveau 0 de la sortie $Q_{B2}$.

La bascule B3 a son entrée d'horloge reliée à la sortie $\overline{Q}_{B4}$ de la bascule B4, son entrée D reliée à la masse et sa sortie $Q_{B3}$ reliée à la sortie ECH.

La bascule B4 a encore sa sortie $\overline{Q}_{B4}$ reliée à la sortie FRS, son entrée d'horloge H reliée à la sortie du diviseur DIV et son entrée D reliée à la sortie A du compteur programmable L.

Le compteur L a encore une sortie B reliée à l'entrée D d'une bascule B5 dont l'entrée d'horloge H est aussi reliée à la sortie du diviseur DIV, l'entrée "c" à l'entrée de signal de détection de salve SL et la sortie $\overline{Q_{B5}}$ à la sortie VAL.

Enfin l'ensemble 1 comprend encore une bascule B6 dont l'entrée D est reliée à l'entré de données série DS, l'entrée d'horloge H à la sortie du diviseur DIV et la sortie QB6 à la sortie de données DE.

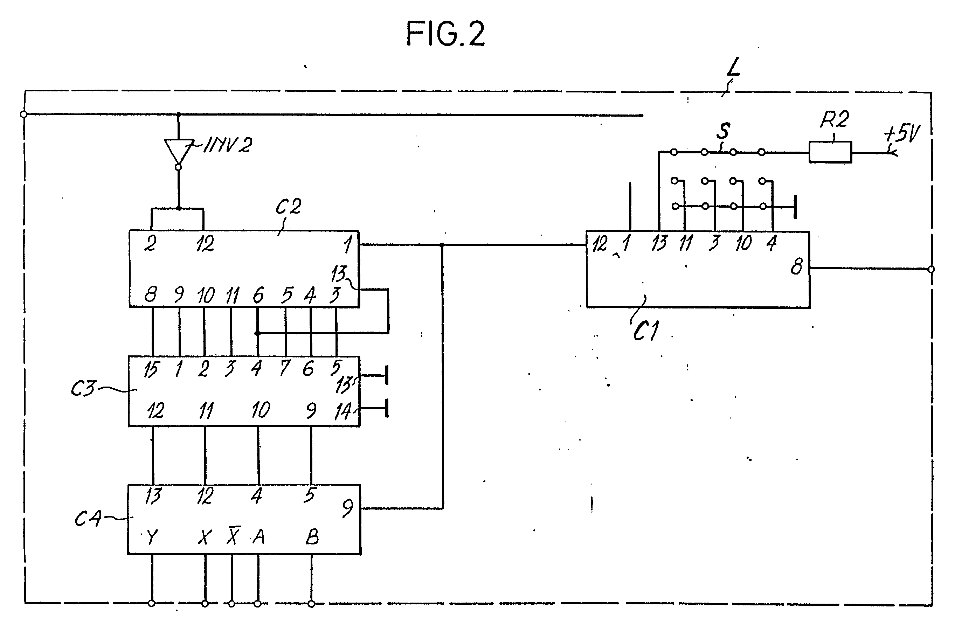

Un exemple de réalisation du compteur programmable L est représenté à la Fig. 2. Il comprend quatre circuits C1 à C4 dont les références techniques et commerciales sont respectivement 74LS197, 74LS393, 6301 et 74LS175. Les circuits C1 et C2 sont des compteurs et le circuit C3 est une mémoire morte. Les compteurs C1 et C2 servent à adresser la mémoire C3. Le circuit C4 sert à échantillonner les signaux de sortie de la mémoire C3.

La borne 8 du circuit C1 est reliée à la sortie de l'horloge CLX, ses bornes 11, 3, 10 et 4 sont reliées à des premiers contacts, sa borne 13 est reliée par des seconds contacts montés en série avec une résistance R2, elle-même reliée à une source de tension +5V. Des cavaliers permettent de choisir la phase de sortie du compteur ou diviseur par 16 C1, en couplant sélectivement des premiers contacts et des seconds contacts, d'une part, et des premiers contacts et des troisièmes contacts à la masse, d'autre part. La borne 1 de programmation de la phase initiale du circuit C1 est reliée à la sortie QB1 de la bascule B1, et sa borne 12 est relié e à la borne 1 du circuit C2.

Dans le circuit C2, les bornes 2 et 12 sont reliées à la sortie $Q_{B1}$ de la bascule B1, par l'intermédiaire d'un inverseur INV2. Par ailleurs, ses sorties 8, 9, 10, 11, 6, 5, 4, 3 sont respectivement reliées aux bornes 15, 1, 2, 3, 4, 7, 6, 5 du circuit C3. Enfin, la borne 6 de C2 est reliée à sa borne 13.

Dans le circuit C3, les bornes 13 et 14 sont à la masse et les bornes 12, 11, 10 et 9 sont respectivement reliées aux bornes 13, 12, 4 et 5 du circuit C4.

Dans le circuit C4, la borne 9 est reliée à la borne de sortie 12 du circuit C1 et les bornes 14, 10, 11, 3 et 7 constituent respectivement les bornes de sortie Y, X, $\overline{X}$, A et B du circuit logique L. A noter que la sortie $\overline{X}$ permet de supprimer l'inverseur INV1 de la Fig. 1.

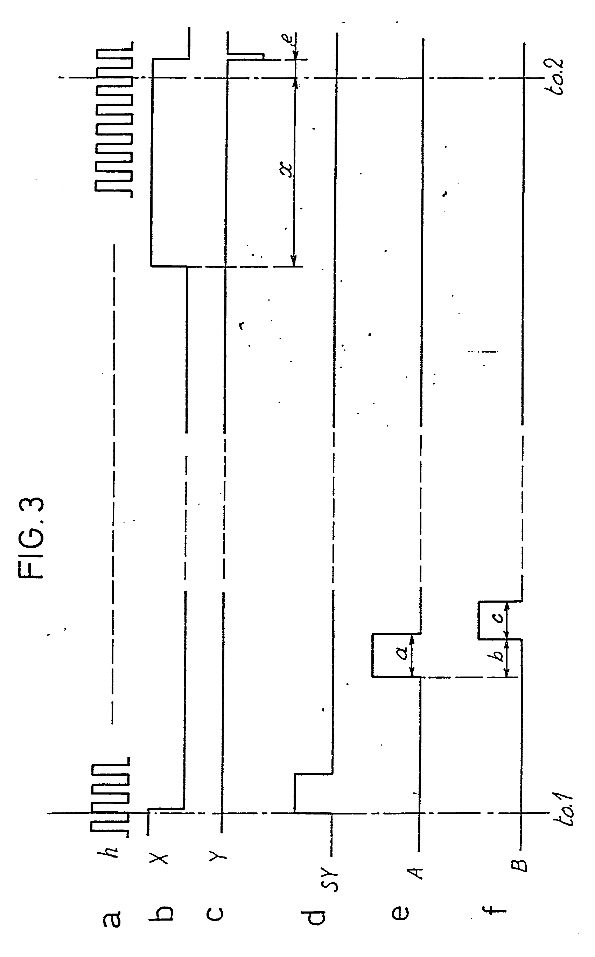

Les Figs. 3a à 3f sont des diagrammes de temps illustrant respectivement le signal de sortie $h$ de l'horloge CLX, le signal X à la sortie X, le signal Y à la sortie Y, le signal de synchronisation externe SY, le signal A à la sortie A et le signal B à la sortie B du circuit logique L. Il apparaît que le front montant du signal X est émis $x$ bits avant le front avant du signal de synchronisation de la ligne de télévision tandis que le signal Y est délivré au compte $y$ bits. Le compte $x$ survient légèrement avant la fin attendue de la ligne télévision tandis que la compte $y$ correspond à un temps qui suit le signal de synchronisation de la ligne suivante.

En se référant au circuit de la Fig. 1, il apparaît que le signal X met la bascule B1 à 1 à l'extérieur de la fenêtre "x". Si le signal de synchronisation de la ligne suivante apparaît avant le signal Y, il fait immédiatement passer la sortie $Q_{B1}$ à l'état 0 ce qui réinitialise immédiamment la phase du diviseur C1. C'est le cas qui est illustré dans la partie gauche des Figs. 3b à 3d, où le signal SY survient à l'instant to.1. Dans ce cas le signal Y n'est pas émis.

Si, comme on l'a montré dans la partie droite des Figs. 3b à 3d, le signal de synchronisation SY, attendu en to.2, n'est pas encore apparu au moment de l'apparition du signal Y, c'est ce dernier qui remet la bascule B1 à "0" ce qui a aussi pour effet de réinitialiser la phase du diviseur C1.

Il apparaît donc qu'en pratique, les signaux X et Y définissent ensemble une fenêtre dans laquelle le signal de synchronisation est attendu. S'il y apparaît, le processus de génération de la nouvelle fenêtre est immédiatement réinitialisé. S'il n'est pas apparu dans la fenêtre, c'est la fin de cette dernière qui réinitialise ce processus. Dans ce dernier cas, le signal X suivant sera retardé d'une valeur $e$ correspondant à l'intervalle de temps $e$ entre to.2 et le signal Y, tel que représenté à la Fig. 3c. En principe, l'avance du signal X sur le signal de synchronisation, soit $x$ sur la Fig. 3b, est choisi de l'ordre de quize fois plus grand que $e$, de manière à pouvoir immédiatement restaurer le synchronisation extérieure si l'absence du signal de synchronisation dure moins de quinze lignes consécutives.

Il faut noter que le temps de réponse de la bascule B1, lié au signal Y, est inclus dans le temps de la boucle d'asservissement que constitue le compteur L et la bascule B1.

Il ressort des Figs. 1 et 2 que les signaux X et Y sont définis par comptage à partir de l'oscillateur CLX dont la fréquence a été choisie égale à hit fois la fréquence bit. Leurs positions temporelles dépendent donc de la fréquence bit utilisée ainsi que de la durée de la ligne de télévision, qui varient avec le standard utilisé. En pratique, dans un standard à 525 lignes, la fréquence bit est de 5,727272 Mbit/s, soit 364 fois la fréquence ligne. Dans le standard à 625 lignes, on peut choisir une fréquence bit de 6,203125 Mbit/s, soit 397 fois la fréquence ligne, ou de 6,937500 Mbit/s, soit 444 fois la fréquence ligne.

On peut définir le compte X par $X = N - 2$ et le compte Y par $Y = N + e$, avec $N = (Fbit)/(Fligne)$ et $e = 1/(8Fbit)$. Pour un standard de 625 lignes, on obtient alors $x = 320$ ns et $e = 20$ ns.

Le signal A qui définit la recherche de salve de synchronisation est toujours situé 10,5 microsecondes après le front montant de la synchronisation ligne. Ainsi, le compte à effectuer par le compteur L pour délivrer le signal A varie en fonction des standards mentionnés plus haut, entre les trois valeurs 60, 65, 73. Ensuite la largeur $a$ de l'impulsion A, Fig. 3e, est égale à $12/(Fbit)$, quel que soit le standard.

De même, l'écart temporel $b$ entre le front avant du signal A et celui du signal B est égal à $18/(Fbit)$ et la largeur $c$ du signal B est égale à $8/(Fbit)$.

Dans la pratique, la bascule B4 échantillonne le signal A et, par l'intermédiaire de la bascule B2, sert à initialiser le diviseur par huit DIV qui restitue la fréquence bit. La fréquence bit est utilisée dans les bascules B5 et B6 pour transmettre le signal de validation VAL et les données DE.

## Revendications

1. Circuit de régénération de signaux périodiques, éventuellement momentanément perturbés, le circuit étant réalisable sous forme numérique en apportant une meilleure précision dans la régénération, caractérisé en ce qu'il comprend un compteur programmable (L), une bascule D (B1) et une horloge (CLX) dont la sortie est reliée à l'entrée du compteur programmable (L), la fréquence de l'horloge (CLX) étant nettement plus élevée que celle des instants périodiques, le compteur programmable (L) ayant une entrée d'initialisation reliée à la sortie Q de la bascule (B1), et deux sorties de compte prédéterminées (X, Y) dont la première sortie (X) est reliée à l'entrée de mise à 1 de la bascule (B1), tandis que la seconde sortie est reliée à l'entrée de remise à 0 de la bascule (B1), l'entrée D de la bascule (B1) étant reliée à un potentiel de niveau 0 et l'entrée d'horloge de la bascule (B1) recevant les signaux périodiques, éventuellement perturbés, la première sortie (X) du compteur (L) délivrant la signal périodique régénéré.

2. Circuit suivant la revendication 1, prévu pour être utilisé dans le récepteur d'un système de télédiffusion de données, caractérisé en ce que la fréquence de l'horloge est égale à un multiple de la fréquence bit du train de données à recevoir, le signal périodique à régénérer étant le signal de synchronisation ligne.

## Patentansprüche

1. Schaltung zum Regenerieren periodischer, möglicherweise vorübergehend gestörter Signale, wobei die Schaltung zur Erzielung einer größeren Genauigkeit in der Regenerierung als digitale Schaltung ausführbar ist, dadurch gekennzeichnet, daß die Schaltung einen programmierbaren Zähler (L), ein D-Flip-Flop (B1) und einen Taktgenerator (CLX) aufweist, dessen Ausgang mit dem Eingang des programmierbaren Zählers (L) verbunden ist, daß die Frequenz des Taktgenerators (CLX) wesentlich höher als die Frequenz des periodischen Signals ist, daß der programmierbare Zähler (L) einen mit dem Q-Ausgang des Flip-Flop (B1) verbundenen Reset-Eingang und zwei vorbestimmte Zählausgänge (X, Y) aufweist, von denen der erste Ausgang (X) mit dem Setzeingang des Flip-Flop (B1) verbunden ist, während der zweite Ausgang (Y) mit dem Rücksetz-Eingang des Flip-Flop (B1) verbunden ist, daß der Eingang D des Flip-Flop (B1) mit Nullpotential verbunden ist, der Takteingang des Flip-Flop (B1) das möglicherweise gestörte periodische Signal empfängt und der erste Ausgang (X) des Zählers (L) das regenerierte periodische Signal liefert.

2. Schaltung nach Anspruch 1 für die Anwendung in einem Daten-Übertragungssystem, dadurch gekennzeichnet, daß die Frequenz des Taktgenerators gleich einem Vielfachen der Bit-Frequenz der zu empfangenen Datenfolge und das zu regenerierende periodische Signal das Zeilensynchronsignal ist.

## Claims

1. A circuit for regenerating periodic signals, even being momentary disturbed, the circuit being digitally embodied to allow a better precision in the regeneration, characterized in that it comprises a programmable counter (L), a D flip-flop (B1) and a clock (CLX) the output of which is connected to the input of the programmable counter (L), the frequency of the clock (CLK) being much higher than the frequency of the periodic signals, the programmable counter (L) having a reset input connected from the Q output of flip-flop (B1) and two predetermined signal outputs (X, Y), the first output (X) being connected to the input of flip-flop (B1) while the second output (Y) is connected to the reset input of flip-flop (B1), input D of flip-flip (B1) being connected from a O level potential and clock input of flip-flop (B1) receiving possibly disturbed periodic signals, the first output (X) of counter (L) providing the regenerated periodic signal.

2. A circuit in accordance with claim 1, for use in a data broadcast system receiver, characterized in that the clock frequency is equal to a multiple of the bit rate of the data to be received, the periodic signal to be regenerated being the line synchronization signal.

# FIG.1

EP 0 148 098 B1

# FIG.2

EP 0 148 098 B1

# FIG.3

EP 0 148 098 B1